# DEMANDE DE BREVET EUROPEEN

(11) **EP 1 424 386 A1**
(43) Date de publication de la demande: **02.06.2004**
(21) Numéro de dépôt: 03362021.2
(22) Date de dépôt: 24.11.2003
(51) Int. Cl.: C12G 3/07, C12G 3/08

(54) **Procédé de supplementation en constituants d'une boisson alcoolisée et application notamment à l'élévage d'un vin rouge dans un contenant**

(30) Priorité: 28.11.2002 FR 0214969
(71) Demandeur: Laffort Oenologie, 33100 Bordeaux (FR)
(72) Inventeur: Laffort, Jean-François, 33800 Bordeaux (FR)
(74) Mandataire: Thébault, Jean-Louis

(57) **Abrégé**

- L'objet de l'invention est un procédé de supplémentation en constituants d'une boisson alcoolisée, lors de son élaboration, dans lequel, lors de la mise en place de ladite boisson dans un contenant d'élaboration, on effectue un ajout à ladite boisson desdits constituants, caractérisé en ce que ledit ajout est effectué avec une dose de constituants déterminée en fonction de la différence, mesurée ou estimée, d'apport en lesdits constituants entre une barrique en bois neuve de la meilleure essence et ledit contenant d'élaboration et en ce que des ajouts complémentaires sont effectués à intervalles déterminés et avec des dosages déterminés en fonction de la nature dudit contenant, en sorte de compenser au cours du temps la diminution par dégradation desdits constituants et d'obtenir une courbe de concentration en constituants de ladite boisson tendant vers celle qui serait obtenue avec ladite barrique de la meilleure essence aux lieu et place dudit contenant.

## Description

La présente invention a trait à l'élaboration de boissons alcoolisées et plus particulièrement à la supplémentation en certains constituants desdites boissons au cours de leur élaboration et notamment bien que non exclusivement à la supplémentation en divers constituants, par exemple en tanins, d'un vin rouge lors de son élevage dans un contenant.

C'est dans cette application à l'élevage d'un vin rouge que l'invention va être décrite ci-après, mais il est évident que le procédé de l'invention peut s'appliquer plus généralement à la vinification d'un moût à l'élevage d'eaux de vie telles que le cognac par exemple, ou encore à la fabrication de bières.

On sait que le passage d'un vin, d'un moût, d'une boisson alcoolisée dans un contenant de bois et notamment en barrique permet à celui-ci de se charger petit à petit d'un certain nombre de constituants du bois par des phénomènes de diffusion.

Dans le même temps on assiste grâce à la porosité de la barrique à des phénomènes d'oxydation ménagée du vins et des constituants cédés par la barrique.

Les constituants cédés varient bien évidemment en fonction de l'origine du bois, en fonction du brûlage des douelles.

Tous ces phénomènes sont parfaitement connus.

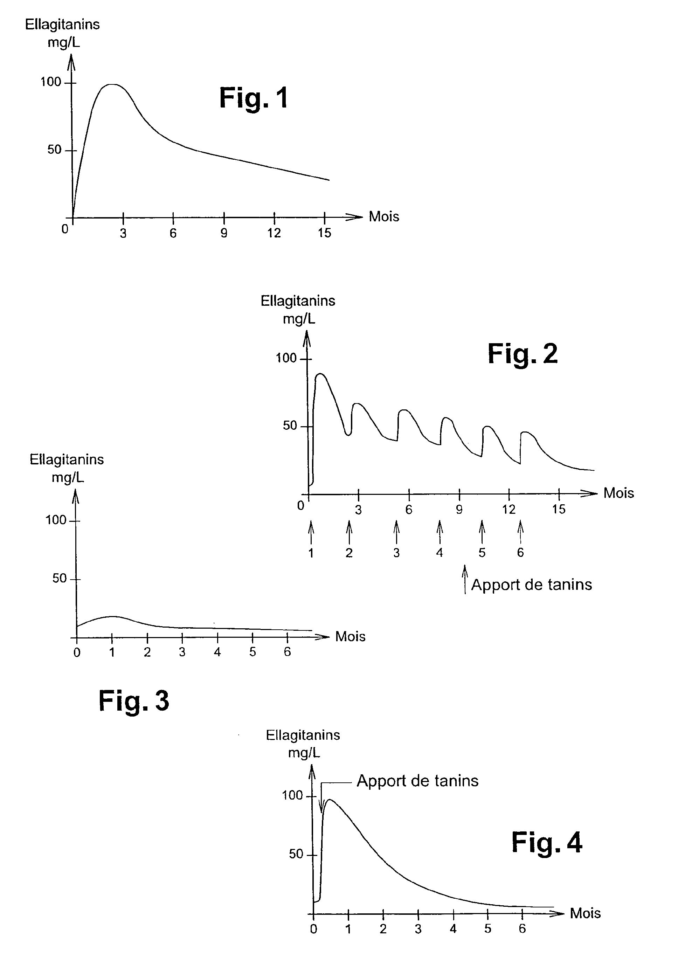

A titre illustratif on a représenté sur la figure 1 ci-annexée l'évolution des tanins ellagiques cédés par une barrique de chêne français au cours de l'élevage d'un vin. On s'aperçoit que dans une premier temps le taux de tanins ellagiques peut monter jusqu'à une concentration comprise entre 50 et 150 mg/L dans le vin en fonction de la nature du bois utilisé et de l'intensité de sa chauffe. Par la suite, au fur et à mesure de l'épuisement du bois en tanins ellagiques, les phénomènes d'hydrolyse et d'oxydation entraînant la dégradation de ces tanins deviennent plus importants que leur dissolution dans le vin ce qui entraîne une diminution constante de leur concentration dans le vin, comme on peut l'observer sur la courbe de la figure 1.

L'élevage des vins ou des boissons alcoolisées peut se faire en barrique neuve mais également dans des contenants en bois plus ou moins usagés et qui au fur et à mesure de leur utilisation vont s'appauvrir en constituants susceptibles d'être cédés au liquide et notamment en tanin ellagique. En effet, un élevage de 4 mois en barriques neuves de chêne français peut permettre d'avoir une quantité d'ellagitanins totaux dans le vin avoisinant les 100 mg/L alors que la même durée d'élevage sur une barrique usagée ne permettra d'avoir qu'une quantité inférieure à 30 mg/L.

D'autre part, il s'avère également que certaines provenances de bois ne sont que peu susceptibles de céder certains tanins ellagiques au vin. Ainsi les barriques issues de chênes américains sont beaucoup plus pauvres en tanins ellagiques que celles issues de chêne français de par leur origine botanique.

Le but de cette invention est de pallier à la pauvreté en certains constituants et notamment en tanins, de certains contenants, soit parce qu'ils ne sont pas en bois, soit parce qu'il s'agit de contenants en bois usagés ou pauvres par leur nature, en sorte d'avoir, par exemple dans un vin rouge, une quantité de certains constituants recherchés tels que des tanins ellagiques, suivant une concentration sensiblement analogue à celle qu'il aurait s'il avait été élevé, durant la même période de temps, dans une barrique en bois neuve de la meilleure essence.

A cet effet, l'invention a pour objet un procédé de supplémentation en constituants d'une boisson alcoolisée, lors de son élaboration, dans lequel, lors de la mise en place de ladite boisson dans un contenant d'élaboration, on effectue un ajout à ladite boisson desdits constituants, caractérisé en ce que ledit ajout est effectué avec une dose de constituants déterminée en fonction de la différence, mesurée ou estimée, d'apport en lesdits constituants entre une barrique en bois neuve de la meilleure essence et ledit contenant d'élaboration et en ce que des ajouts complémentaires sont effectués à intervalles déterminés et avec des dosages déterminés en fonction de la nature dudit contenant, en sorte de compenser au cours du temps la diminution par dégradation desdits constituants et d'obtenir une courbe de concentration en constituants de ladite boisson tendant vers celle qui serait obtenue avec ladite barrique de la meilleure essence aux lieu et place dudit contenant.

Une application du procédé ci-dessus à l'élevage d'un vin rouge devant être supplémenté en tanins va maintenant être décrite en se référant à la figure 2 qui illustre la courbe d'évolution des tanins ellagiques lors de l'élevage d'un vin rouge dans les conditions de l'invention, et aux figures 3 et 4 qui illustrent respectivement l'évolution de la concentration en tanins ellagiques d'un vin rouge élevé en barrique usagée et sans apport de tanins (fig.3) et l'évolution de la concentration en tanins ellagiques d'un vin rouge élevé en barrique usagée avec apport de tanins en une seule fois (fig.4).

Il est déjà connu, lors de la vinification d'un moût ou l'élevage d'un vin, d'ajouter dans la cuve de moût ou de vin des produits oenologiques pouvant être constitués par du tanin, comme décrit dans FR 2 746 812.

Toutefois, il s'agit d'un apport initial et unique qui n'est nullement de nature à pallier les inconvénients rappelés plus haut de l'utilisation de contenants en bois usagés ou pauvres par leur nature ou de contenants qui ne sont pas en bois.

En effet, s'il était ajouté, par exemple en une seule fois, une dose importante de tanin ellagique dès le départ sur une barrique usagée, peu susceptible de céder de par elle-même des tanins ellagiques, celui-ci serait hydrolysé et oxydé au bout de quelques mois et l'oxydation ménagée des tanins ellagiques au cours du temps ne se ferait plus par la suite comme dans une barrique neuve. La figure 4 illustre précisément les effets d'un tel ajout dans une barrique usagée et la comparaison avec la figure 1 permet de noter de manière saisissante la différence très importante de concentration en tanins au bout de trois mois d'élevage.

D'autre part, l'addition en une seule fois de tanin ellagique conduit à des vins moins souples et moins ronds que ce que l'on peut obtenir par une addition fractionnée au cours du temps selon les enseignements de l'invention.

Conformément à l'invention on procède au remplissage habituel des barriques par exemple des barriques usagées, puis on introduit au moyen d'une dose pré-calculée pour une barrique (comprimé, dosette, poudre ou granulé pré-pesé) le ou les tanins désirés en fonction de la nature du contenant. Il peut s'agit de divers tanins, par exemple d'un tanin ellagique, d'un tanin proanthocyanidique d'un tanin gallique ou d'un mélange de divers tanins. A ce titre l'utilisation d'une poudre ou granulé effervescent ou d'un comprimé de tanin(s) effervescent facilitera grandement l'homogénéisation et la dissolution du produit dans la barrique tout en rendant l'opération plus pratique. C'est cette forme qui sera donc préférentiellement préconisée.

A titre d'exemple, non limitatif, un assemblage de bicarbonate de potassium 38%, d'acide citrique 21 % et de tanin ellagique 41 % donne de très bons résultats en pratique.

La dose initiale de tanin(s) ajoutée pour compenser le déficit du contenant pourra se faire en fonction de la différence mesurée ou estimée du contenant par rapport à une barrique neuve de la meilleure essence. Pour cela, plusieurs façons de procéder peuvent être mises en oeuvre :
- dosage des ellagitanins totaux par HPLC ou par méthode chimique,
- appréciation par les caractères organoleptiques du liquide,
- estimation de manière empirique de la quantité à ajouter sachant par exemple qu'une barrique usagée ayant déjà contenu un vin ne pourra céder au maximum qu'une quantité de l'ordre de 30 mg/L d'ellagitanin, il faudra ajouter une dose entre 50 et 80 mg/L d'ellagitanin pour correspondre à un élevage en barrique neuve.

L'unité mg/L utilisé dans la présente invention signifie milligramme par litre de moût traité.

Par la suite, et à une fréquence qui pourrait être par exemple mensuelle ou bimestrielle, il sera ajouté à chaque barrique, avec les préparations telles que décrites plus haut, une dose pré-calculée de tanin(s) pour simuler l'apport qui aurait été naturellement fait par une barrique neuve notamment une barrique en bois de la meilleure essence.

Cet apport au cours du temps permettra alors de compenser la diminution par dégradation oxydative des tanins (de l'ordre de 10 à 20 mg/L/mois) pour se maintenir au même niveau qu'une barrique neuve. Cet apport devra être moins important vers la fin de l'élevage (de l'ordre de 5 à 10 mg/L/mois) pour mieux simuler ce qu'il se passe par exemple en barrique neuve de chêne français, c'est-à-dire un épuisement du bois en substances solubilisables dans le liquide, entraînant une teneur en tanins ellagiques de plus en plus faible. On aura ainsi une évolution par exemple des tanins ellagiques se présentant comme illustré en figure 2.

Sur la figure 2 en 1 est indiqué le premier apport de tanin(s) lors de la mise en barrique du vin d'élevage, et en 2, 3, 4, 5 et 6 des apports complémentaires dosés effectués à intervalles d'un ou deux mois, le premier apport complémentaire (N° 2) étant réalisé après trois mois (ou éventuellement quatre) de séjour en barrique.

Les pics correspondant aux apports N° 2 à 6 sont progressivement moins élevés correspondant aux réductions progressives des doses indiquées plus haut.

On peut bien entendu modifier sensiblement la courbe d'évolution de la concentration en tanin(s) au cours des mois en jouant sur les doses successives et sur le moment de leur introduction dans la barrique.

Le procédé de l'invention permet ainsi d'obtenir une courbe d'évolution de la concentration en tanin(s), notamment en ellagitanins, qui tend vers celle (figure 1) obtenue avec une barrique neuve en bois de chêne français.

La figure 3 illustre ce que l'on aurait obtenu avec une barrique en bois usagée et sans apport de tanin. Dès le début, la concentration par exemple en ellagitanins est très faible et ne cesse pas de se dégrader.

Dans le cas de la figure 4 (barrique usagée avec apport initial et unique d'ellagitanins) au bout de trois mois d'élevage on est au même taux de concentration que dans le cas de la figure 3, alors qu'avec le procédé de l'invention au bout de douze mois on peut avoir une concentration en ellagitanins pouvant se rapprocher de 50 mg/L comme dans le cas de barrique neuve de la meilleure essence (figure 1).

Lorsque les doses ajoutées (N° 2 à 6) sont un mélange de différents tanins (tanins ellagiques, proanthocyanidiques, galliques,...), la dose à ajouter se fera au prorata de la teneur en tanin ellagique de l'ajout initial (N° 1). C'est-à-dire, si le mélange de tanins contient 50% de tanins ellagiques les doses préconisées seront multipliées par 2, de même, s'il s'agit d'un mélange de tanin ellagique avec tous autres produits (chimiques, organiques, minéraux,...).

L'invention s'applique bien entendu à l'élevage d'un vin rouge dans un contenant qui n'est pas en bois, par exemple une cuve métallique ou en béton, auquel cas les doses d'ajout de tanin(s) ou analogues sont plus importantes pour tenir compte de l'apport nul du matériau de la cuve.

Le procédé de l'invention s'applique également à l'élevage d'un vin rouge en cuve hermétique à condition de recréer les mêmes phénomènes oxydatifs que ceux observés dans les barriques en bois.

A cet effet, en complément des ajouts de tanin(s), on introduira dans le liquide de la cuve de manière régulière, continue ou échelonnée par doses périodiques, une certaine quantité d'oxygène, par exemple et en moyenne de l'ordre de 0,5 à 5 mg/L et par mois, par divers procédés tels que microbullage, aération, composé ou mélange de produits dégageant de l'oxygène.

Dans ce cas, par exemple, la quantité d'ellagitanins à rajouter se fera en considérant qu'il n'y a pas d'ellagitanins diffusibles par le contenant et la valeur de l'apport initial sera aux alentours de 100 mg/L. Les quantités ajoutées au cours du temps seront d'environ 5 mg/L/mois supérieures à celles du cas illustré par la figure 2.

Ces doses renforcées correspondent à celles utilisées dans le cas de barriques usagées.

Le procédé de l'invention peut encore être utilisé pour supplémenter par exemple en tanins des eaux de vie, les doses étant sensiblement plus fortes que pour le vin.

Ainsi, pour réaliser une eau de vin du type cognac VSOP, la quantité totale de tanin à ajouter sera d'environ 1 g par degré d'alcool et par hectolitre.

Ce rajout pourra se faire pour moitié au départ de l'élevage, puis ensuite lors d'un élevage d'un minimum de 12 mois et porté à 18 mois de préférence, un rajout de 1 /10 de la dose totale pré-calculée, pour la première fois au bout de 4 mois et puis ensuite tous les deux mois. La fréquence des rajouts et l'ajustement des doses pourront être modifiés en fonction de la dégustation.

Lorsqu'on réalisera une eau de vie type Brandy plus ordinaire, on opérera de même mais à des doses plus faibles pouvant atteindre le 1/3 de celles déterminées plus haut.

Dans le cas des eaux de vie, soit l'élevage se fera en fûts usagés ou en barriques usagées et les phénomènes d'oxydation ménagée seront réalisés à travers le bois, soit l'élevage se fera en cuve hermétique et de la même manière que dans l'exemple donné plus haut à propos du vin et impliquera de recréer les mêmes phénomènes oxydatifs que ceux produits au niveau de la barrique en apportant une quantité d'oxygène de l'ordre en moyenne de 0,5 à 5 mg/L et par mois par les procédés précédemment décrits, de manière continue ou échelonnée.

Il est à noter que le procédé de l'invention peut être mis en oeuvre pour supplémenter toute boisson alcoolisée (vin, eau de vie, bière, etc...) en divers constituants, tanins ou autres, notamment en constituants naturellement apportés par le matériau du contenant d'élaboration de la boisson alcoolisée lorsque ces constituants ne sont pas apportés en quantité suffisante, voire lorsqu'ils ne sont pas apportés du tout comme c'est le cas de contenants constitués de cuves métalliques ou en béton, alors qu'il est souhaitable que la boisson élaborée contienne de tels constituants.

## Revendications

1. Procédé de supplémentation en constituants d'une boisson alcoolisée, lors de son élaboration, dans lequel, lors de la mise en place de ladite boisson dans un contenant d'élaboration, on effectue un ajout à ladite boisson desdits constituants, **caractérisé en ce que** ledit ajout est effectué avec une dose de constituants déterminée en fonction de la différence, mesurée ou estimée, d'apport en lesdits constituants entre une barrique en bois neuve de la meilleure essence et ledit contenant d'élaboration et **en ce que** des ajouts complémentaires sont effectués à intervalles déterminés et avec des dosages déterminés en fonction de la nature dudit contenant, en sorte de compenser au cours du temps la diminution par dégradation desdits constituants et d'obtenir une courbe de concentration en constituants de ladite boisson tendant vers celle qui serait obtenue avec ladite barrique de la meilleure essence aux lieu et place dudit contenant.

2. Procédé suivant la revendication 1, plus particulièrement appliqué à la supplémentation en tanin(s) ou analogues d'un vin lors de son élevage en barrique en bois usagé, **caractérisé en ce que** ledit ajout initial est effectué avec une dose de tanin(s) comprise entre 50 et 80 mg/L, cependant que l'apport ultérieur est de l'ordre de 5 à 20 mg/L/mois.

3. Procédé suivant la revendication 2, **caractérisé en ce que** le deuxième ajout est effectué environ trois ou quatre mois après l'ajout initial et les ajouts ultérieurs sont espacés entre eux d'un ou deux mois.

4. Procédé suivant la revendication 2 ou 3, **caractérisé en ce que** l'apport ultérieur est d'abord de l'ordre de 10 à 20 mg/L/mois, puis de l'ordre de 5 à 10 mg/L/mois vers la fin de l'élevage.

5. Procédé suivant l'une des revendications 2 à 4, **caractérisé en ce que** les tanins sont constitués par l'un des constituants du groupe comprenant les tanins ellagiques, les tanins proanthocyanidiques, les tanins galliques, ou un mélange d'une partie ou de la totalité de ceux-ci.

6. Procédé suivant l'une des revendications 2 à 5, **caractérisé en ce que** les ajouts de tanins sont effectués sous forme d'une poudre, d'un granulé ou d'un comprimé effervescent.

7. Procédé suivant la revendication 1, plus particulièrement appliqué à la supplémentation en tanin(s) ou analogues, d'un vin lors de son élevage en cuve hermétique, **caractérisé en ce qu'**en complément des divers ajouts de tanin(s) on introduit dans la cuve de l'oxygène de manière continue ou échelonnée.

8. Procédé suivant la revendication 7, **caractérisé en ce que** la quantité d'oxygène est comprise en moyenne entre 0,5 et 5 mg/L par mois.

9. Procédé suivant la revendication 7 ou 8, **caractérisé en ce que** l'oxygène est introduit par l'un des procédés du groupe constitué par le microbullage, l'aération, le dégagement à partir d'un composé ou d'un mélange de produits.

10. Procédé suivant l'une des revendications 7 à 9, **caractérisé en ce que** l'ajout initial est effectué avec un dosage de l'ordre de 100 mg/L, l'apport ultérieur étant dégressif entre 25 mg/L/mois et 10 mg/L/mois.

11. Procédé suivant la revendication 1, plus particulièrement appliqué à la supplémentation en tanin(s) d'une eau de vie élevée en barrique usagée.

12. Procédé suivant la revendication 1, plus particulièrement appliqué à la supplémentation en tanin(s) d'une eau de vie élevée en cuve hermétique, de l'oxygène étant diffusé en quantité appropriée dans le liquide, de manière continue ou échelonnée.
